# EUROPÄISCHE PATENTSCHRIFT

(11) **EP 3 069 041 B1**
(45) Veröffentlichungstag und Bekanntmachung des Hinweises auf die Patenterteilung: **27.11.2024**
(21) Anmeldenummer: 14789850.6
(22) Anmeldetag: 29.10.2014
(51) Int. Cl.: F16F 1/38, B29C 70/54

(54) **FUNKTIONELLES BAUTEIL, INSBESONDERE FÜR EIN KRAFTFAHRZEUG, VERFAHREN ZUR HERSTELLUNG EINES FUNKTIONELLEN BAUTEILS UND KRAFTFAHRZEUG, DAS EIN FUNKTIONELLES BAUTEIL UMFASST**
FUNCTIONAL COMPONENT, IN PARTICULAR FOR A MOTOR VEHICLE, METHOD FOR PRODUCING A FUNCTIONAL COMPONENT, AND A MOTOR VEHICLE COMPRISING A FUNCTIONAL COMPONENT
PIÈCE FONCTIONNELLE, EN PARTICULIER DESTINÉE À UN VÉHICULE AUTOMOBILE, PROCÉDÉ DE FABRICATION D'UNE PIÈCE FONCTIONNELLE ET VÉHICULE AUTOMOBILE COMPRENANT UNE PIÈCE FONCTIONNELLE

(30) Priorität: 15.11.2013 DE 102013223295
(43) Veröffentlichungstag der Anmeldung: 21.09.2016
(73) Patentinhaber: Bayerische Motoren Werke Aktiengesellschaft, 80809 München (DE)
(72) Erfinder: KELLER, David, 80638 München (DE)
(86) Internationale Anmeldenummer: PCT/EP2014/073171
(87) Internationale Veröffentlichungsnummer: WO 2015/071096

(56) Entgegenhaltungen:
- EP-A1- 0 896 168
- EP-A1- 2 463 542
- WO-A1-2011/095278
- DE-A1- 102011 053 222
- JP-A- H0 972 365
- JP-A- H08 192 442
- JP-A- S58 206 407
- JP-A- S59 153 607
- JP-U- H0 669 469
- US-A- 6 116 113
- US-A1- 2008 237 953
- US-A1- 2012 235 333

## Beschreibung

Die vorliegende Erfindung betrifft ein funktionelles Bauteil, insbesondere für ein Kraftfahrzeug und ein Verfahren zur Herstellung eines funktionellen Bauteils. Ferner betrifft die Erfindung auch ein Kraftfahrzeug, das mindestens ein funktionelles Bauteil umfasst.

Funktionelle Bauteile, wie z.B. Knotenelemente in einem Kraftfahrzeug, umfassen zur Anbindung von weiteren Bauteilen, wie Lenker und dergleichen, Aufnahmevorkehrungen bzw. Anbindungsfunktionen. Diese Aufnahmevorkehrungen, und darunter Gummilager, werden in die, üblicherweise aus einem metallischen Werkstoff gebildeten, Knotenelemente eingeschraubt, eingepresst oder mit den Knotenelementen durch eine Klebeverbindung verbunden. Nachteilig an dieser Art funktionellem Bauteil sind das relativ hohe Eigengewicht, eine komplexe Struktur des Knotenelements und ein aufwendiges Herstellverfahren.

DE 10 2011 053 222 A1 offenbart einen Querlenker aus faserverstärktem Kunststoff für eine Radaufhängung eines Fahrzeuges, der mindestens zwei Lagerelemente und mindestens einen die Lagerelemente verbindenden Steg umfasst. Der mindestens eine Steg ist als doppel- oder mehrlagiger Steg aus einem faserverstärkten, flächigen Prepreg durch Falten hergestellt und mindestens eines der Lagerelemente ist als schlaufenförmiger Abschnitt im Faltbereich des Prepregs ausgebildet, und wobei die Lagen des mindestens einen Steges stoffschlüssig miteinander verbunden sind.

JP S58 206407 A und JP S59 153607 A lehren das Herstellen von Querlenken unter Verwendung von Faserverbundmaterialien, wie z.B. sheet molding compounds (SMC), wobei die einzelnen Elemente mittels eines Adhäsivs miteinander verbunden werden.

Ausgehend von diesem Stand der Technik ist es Aufgabe der vorliegenden Erfindung ein stabiles Bauteil mit hoher Funktionalität im Hinblick auf ein Lagern von weiteren Bauteilen, bei einfacher und gleichzeitig gewichtsreduzierter Struktur, bereitzustellen. Ferner ist es Aufgabe der Erfindung ein Verfahren zur Herstellung eines funktionellen Bauteils anzugeben, das einfach, ohne hohen technischen Aufwand und damit auch kostengünstig umsetzbar sind. Darüber hinaus ist es Aufgabe der vorliegenden Erfindung ein Kraftfahrzeug mit hohem Fahrkomfort und guter Fahrdynamik anzugeben, das sich zudem durch ein reduziertes Eigengewicht auszeichnet.

Die vorliegende Erfindung ist in den anhängenden Ansprüchen definiert.

Die vorstehende Aufgabe wird bei einem funktionellen Bauteil, insbesondere für ein Kraftfahrzeug, erfindungsgemäß dadurch gelöst, dass das Bauteil eine gehärtete Faserverbundpressmasse umfasst, wobei in die Faserverbundpressmasse mindestens ein Gummilager integriert ist. Die gehärtete Faserverbundpressmasse, die üblicherweise mindestens ein Reaktionsharz und Fasermaterial enthält, und u.a. auch als SMC (sheet molding compund) oder BMC (bulk molding compound) bezeichnet wird, zeichnet sich gegenüber herkömmlichen metallischen Werkstoffen durch ein deutlich reduziertes Eigengewicht bei sehr guter mechanischer Stabilität aus. Erfindungsgemäß ist mindestens ein Gummilager in die gehärtete Faserverbundpressmasse integriert. Ein Gummilager im Sinne der Erfindung ist eine Aufnahmevorkehrung oder Anbindungsfunktion für weitere Bauteile, die durch das Gummilager im funktionellen Bauteil geräuscharm und vibrationsarm gelagert werden. Das Gummilager ist in herkömmlicher Weise gebildet und umfasst vorzugsweise einen Lagerkern und eine den Lagerkern umgebende Schicht aus Gummi oder einem gummiähnlichen Material. Die anzubindenden, also zu lagernden Bauteile werden beispielsweise in eine Aussparung im Lagerkern eingebracht. Durch das direkte Integrieren des Gummilagers in die gehärtete Faserverbundpressmasse kann auf zusätzliche Verbindungsmittel oder Befestigungsmittel für die Anordnung des Gummilagers verzichtet werden. Dies ist dadurch möglich, dass das Gummilager in die Faserstruktur der Faserverbundpressmasse eingepasst und somit integraler Bestandteil des Bauteils wird. So wird ein hoch funktionelles Bauteil mit einer Anbindungsfunktion bzw. Aufnahmevorkehrung für weitere, zu lagernde Bauteile erhalten, das sich bei einfacher Struktur durch eine gute Stabilität, sehr gute Lagereigenschaften und darüber hinaus ein geringes Eigengewicht auszeichnet. An oder in dem erfindungsgemäßen funktionellen Bauteil können weitere Bauteile auf konventionelle Art angeordnet sein.

Die Unteransprüche beinhalten vorteilhafte Weitebildungen und Ausgestaltungen der Erfindung.

Das Gummilager ist erfindungsgemäß in einer Aussparung in der gehärteten Faserverbundpressmasse angeordnet. Dies trägt zur mechanischen Stabilität des funktionellen Bauteils, insbesondere in dem Bereich der gehärteten Faserverbundpressmasse, in den das Gummilager integriert ist, bei, da beispielsweise bei einem Einsetzen oder Einpressen des Gummilagers in die Faserverbundpressmasse das faserhaltige Material im Wesentlichen nicht beschädigt wird und ferner eine passgenaue Verbindung zwischen dem Gummilager und der Faserverbundpressmasse erzielt wird.

Das Gummilager umfasst erfindungsgemäß einen metallischen oder kunststoffhaltigen Außenring, wobei der Außenring eine erste Haftstruktur aufweist, die ein selbständiges Herauslösen des Gummilagers aus der gehärteten Faserverbundpressmasse verhindert. Durch das Vorsehen eines Außenrings an dem Gummilager kann eine Positionierung und Stabilisierung in der gehärteten Faserverbundpressmasse besonders einfach erfolgen. Vorteilhafte Haftstrukturen umfassen beispielsweise Widerhaken, Riffelungen oder andere reibungssteigernde Strukturen. Dies erhöht die Stabilität des funktionellen Bauteils bei einwirkenden Kräften, wie Stoß- und Zugkräften, Vibrationen oder Rotation.

Weiterhin weist die gehärtete Faserverbundpressmasse eine Buchse zur Aufnahme des Gummilagers auf. Die Buchse bildet das Gegenstück zum Gummilager, also zum Außenring des Gummilagers, so dass eine passgenaue und sehr stabile Integration des Gummilagers in der gehärteten Faserverbundpressmasse erzielt werden kann. Die Buchse kann dabei aus einem metallischen oder kunststoffhaltigen Werkstoff gebildet sein. Das Material der Buchse ist vorzugsweise verschleißbeständig, was ein mehrfaches Einsetzen und Herauslösen des Gummilagers in bzw. aus der Buchse ermöglicht ohne die tragenden Strukturen der Faserverbundpressmasse zu beschädigen.

Erfindungsgemäß ist vorgesehen, dass die Buchse eine zweite Haftstruktur aufweist, die mit der ersten Haftstruktur des Außenrings des Gummilagers in Eingriff gelangt. Die zweite Haftstruktur bildet damit das Gegenstück zur ersten Haftstruktur und ermöglicht eine besonders gute Aufnahme, Positionierung und stabile Haftung des Gummilagers in der Buchse, durch Ausbildung einer formschlüssigen Verbindung.

Vorteilhaft weist die Buchse mindestens einen flächigen Bereich zur Anordnung eines Werkzeugs zur Befestigung des Gummilagers in der Buchse oder zum Herauslösen des Gummilagers aus der Buchse auf. Somit können eine einfache Integration des Gummilagers in die Faserverbundpressmasse und ferner auch ein Austausch des Gummilagers, beispielsweise im Servicefall, erfolgen, ohne dass die Faserverbundpressmasse durch Druck oder Zugkräfte einer partiellen Deformation oder sogar Zerstörung unterliegt.

Zur Verhinderung von Korrosionsschäden am Bauteil, insbesondere bei der Verwendung von Kohlefasern in der Faserverbundpressmasse, ist die Buchse vorzugsweise galvanisch isolierend ausgebildet. Dies kann durch geeignete Materialwahl auf Seiten der Faserverbundpressmasse und insbesondere auf Seiten der Buchse, erfolgen.

Weiter erfindungsgemäß wird auch ein erstes Verfahren zur Herstellung eines wie vorstehend beschriebenen funktionellen Bauteils angegeben, das durch die Schritte:
- Bereitstellen einer Faserverbundpressmasse,
- Härten der Faserverbundpressmasse, wobei die gehärtete Faserverbundpressmasse eine Buchse mit einer zweiten Haftstruktur zur der Aufnahme, Positionierung und Fixierung eines Gummilagers in der gehärteten Faserverbundpressmasse umfasst,
- Bereitstellen eines Gummilagers mit einem metallischen oder kunststoffhaltigen Außenring, wobei das Gummilager (1) eine erste Haftstruktur (6) umfasst und
- Aufnehmen des Gummilagers (1) in die Buchse (5), so dass die erste Haftstruktur (6) und die zweite Haftstruktur (7) der Buchse (5) formschlüssig verbunden werden, so dass der Außenring des Gummilagers in die gehärtete Faserverbundpressmasse integriert wird
gekennzeichnet ist. Durch Ausführung dieses erfindungsgemäßen Verfahrens wird auf einfache Weise, unter Verwendung von Standardprozessen, ein hoch funktionelles, zur Lagerung weiterer Bauteile sehr gut geeignetes Bauteil erhalten, das sich durch ein geringes Eigengewicht und, aufgrund von fehlenden Befestigungsmitteln oder Verbindungselementen zwischen dem Gummilager und der gehärteten Faserverbundpressmasse, durch eine einfache Struktur auszeichnet. Durch die direkte und passgenaue Integration des Außenrings des Gummilagers und damit eine stabile Verankerung des Gummilagers in der Faserverbundpressmasse mittels Einpressen des Gummilagers, ohne Verwendung von herkömmlichen Befestigungsmitteln oder Verbindungselementen, sind der technische und logistische Aufwand des erfindungsgemäßen Verfahrens gering und seine Kostenstruktur optimiert. Ferner ist ein Austausch des Gummilagers sehr leicht möglich, beispielsweise durch ein Auspressen des Gummilagers aus der Ausnehmung. Das erste erfindungsgemäße Verfahren eignet sich daher insbesondere für funktionelle Bauteile in denen das Lager aufgrund der Bauart und seiner Verwendung einem hohen Verschleiß unterliegt und deshalb in regelmäßigen Abständen ausgetauscht werden muss.

Übliche Verfahrensschritte, wie z.B. ein Formen der Faserverbundpressmasse vor dem Härten, können das Verfahren ergänzen.

Ferner wird ein zweites nicht erfindungsgemäßes Verfahren zur Herstellung eines wie vorstehend beschriebenen funktionellen Bauteils beschrieben, das durch die Schritte:
- Bereitstellen einer Faserverbundpressmasse,
- Einbringen der Faserverbundpressmasse in ein Werkzeug,
- Einlegen mindestens eines Gummilagers, das einen metallischen oder kunststoffhaltigen Außenring umfasst, in die Faserverbundpressmasse, so dass der Außenring des Gummilagers mit der Faserverbundpressmasse in Kontakt gelangt,
- Schließen des Werkzeugs,
- Umpressen der Faserverbundpressmasse um das Gummilager und
- Härten der Faserverbundpressmasse
gekennzeichnet ist. Auch das zweite Verfahren zeichnet sich durch eine einfache Umsetzbarkeit unter Verwendung von Standardprozessen aus. Darüber hinaus erfordert das zweite Verfahren zur Integration des Gummilagers keine Nachbearbeitung der gehärteten Faserverbundpressmasse, denn das Gummilager wird bereits vor dem Härten der Faserverbundpressmasse, also im formgebenden Schritt zur Ausbildung der finalen Form des Bauteils, beim Schließen des Werkzeugs, integriert. Damit wird das Gummilager noch besser in die Faserstruktur der Faserverbundpressmasse eingebunden. Die Lagerungseigenschaften sowie die mechanischen Eigenschaften des funktionellen Bauteils sind damit sehr gut.

Ebenfalls wird auch ein drittes nicht erfindungsgemäßes Verfahren zur Herstellung eines wie vorstehend beschriebenen funktionellen Bauteils beschrieben, das durch die Schritte:
- Bereitstellen einer Faserverbundpressmasse,
- Bilden einer Aussparung in der Faserverbundpressmasse und
- Erzeugen eines Gummilagers in der Aussparung in der Faserverbundpressmasse durch ein Spritzgussverfahren, insbesondere durch ein Elastomer-Spritzgussverfahren,

gekennzeichnet ist. Durch das dritte Verfahren wird ebenfalls auf einfache Weise ein strukturoptimiertes Bauteil mit sehr guten Lagereigenschaften und damit hoher Funktionalität bei sehr guter mechanischer Stabilität erhalten. Aufgrund des Schrittes des Erzeugens eines Gummilagers in der Aussparung in der Faserverbundpressmasse durch ein Spritzgussverfahren kann auf das Vorsehen eines Außenrings am Gummilager verzichtet werden, was den logistischen und auch technischen Aufwand des Verfahrens reduziert und zu einer weiteren Gewichtseinsparung des erfindungsgemäßen Bauteils beiträgt. Zudem entfällt eine Korrosionsschutzmaßnahme, da das Gummilager von sich aus eine galvanische Trennung sicherstellt. Falls erforderlich kann eine Kalibrierung des Gummilagers über einen Lagerkern erfolgen. Gemäß des dritten Verfahrens erfolgt die Integration des Gummilagers in die Faserverbundpressmasse gleichzeitig mit der Herstellung des Gummilagers, so dass die Herstellzeiten des Bauteils verkürzt und damit eine hohe Taktung im Herstellprozess ermöglicht werden.

Die für das erfindungsgemäße Bauteil beschriebenen Weiterbildungen, Vorteile und Effekte finden auch Anwendung auf das erfindungsgemäße Verfahren zur Herstellung eines funktionellen Bauteils.

Gemäß einer vorteilhaften Weiterbildung des dritten Verfahrens zur Herstellung eines funktionellen Bauteils umfasst dieses ferner mindestens einen der Schritte:
- Härten der Faserverbundpressmasse und
- Vulkanisieren des Gummilagers.

Durch die angegebenen Verfahrensschritte, und insbesondere durch deren Kombination, werden die finale Form und Struktur des funktionellen Bauteils stabilisiert.

Dabei ist vorteilhaft vorgesehen, dass das Härten der Faserverbundpressmasse und das Vulkanisieren des Gummilagers, insbesondere unter Einwirkung von Temperatur, in einem Schritt erfolgt. Hierdurch kann eine Beschleunigung des Verfahrens und damit eine Verkürzung der Prozesszeiten erzielt werden.

Die Erfindung betrifft ferner ein Kraftfahrzeug, das ein wie oben beschriebenes funktionelles Bauteil umfasst. Das erfindungsgemäße Kraftfahrzeug zeichnet sich aufgrund der optimalen und geräuscharmen Lagerungseigenschaften des erfindungsgemäßen Bauteils durch einen hohen Fahrkomfort, sehr gute Fahrdynamik sowie eine ausgezeichnete Stabilität bei reduziertem Gewicht aus.

Aufgrund der erfindungsgemäßen Lösungen sowie deren Weiterbildungen ergeben sich folgende Vorteile:
- Das erfindungsgemäße Bauteil zeichnet sich durch sehr gute Lagereigenschaften bei einfachem strukturellem Aufbau aus.
- Es werden ein funktionelles Bauteil sowie ein Kraftfahrzeug mit reduziertem Eigengewicht bereitgestellt.
- Das Bauteil zeichnet sich aufgrund der Integration des Gummilagers in die Faserverbundpressmasse durch eine hohe Stabilität und sehr gute mechanische Eigenschaften aus.
- Durch die vereinfachte Struktur des Bauteils ist dieses einfach ohne hohen technischen Aufwand unter Verwendung von Standardprozessen und damit kostengünstig herstellbar.
- Das Kraftfahrzeug mit dem erfindungsgemäßen Bauteil weist einen hohen Fahrkomfort und eine sehr gute Fahrdynamik auf.

Weitere Einzelheiten, Merkmale und Vorteile der Erfindung ergeben sich aus der nachfolgenden Beschreibung und den Figuren. Es zeigen:
- Figur 1: einen Längsschnitt durch ein Gummilager zur Verwendung in einem funktionellen Bauteil, das nicht erfindungsgemäß ist,
- Figur 2: eine Schnittansicht durch ein Bauteil, das nicht erfindungsgemäß ist und
- Figur 3: eine Schnittansicht durch ein Bauteil gemäß einer vorteilhaften Weiterbildung der Erfindung.

In den Figuren sind nur die hier interessierenden Teile des Gummilagers und des funktionellen Bauteils dargestellt, alle übrigen Elemente sind der Übersichtlichkeit halber weggelassen. Ferner beziehen sich gleiche Bezugszeichen auf gleiche Bauteile.

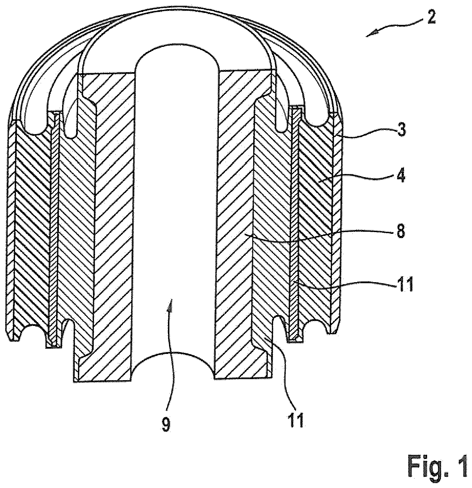

Im Detail zeigt Figur 1 einen Längsschnitt durch ein Gummilager 2, das zur Herstellung eines funktionellen Bauteils geeignet ist. Das Gummilager umfasst einen Außenring 3, der geschlossen oder z.B. auch geschlitzt sein kann, eine innenliegende Schicht aus Gummi oder einem gummiähnlichen Material 4, die eine Innenfläche des Außenrings 3 zumindest abschnittsweise, und vorzugsweise im Wesentlichen vollständig, bedeckt, sowie einen Lagerkern 8, beispielsweise aus einem metallischen Werkstoff. Der Lagerkern 8 ist mindestens abschnittsweise an der Innenseite der Schicht aus Gummi oder gummiähnlichem Material 4 angeordnet. Zwischen dem Lagerkern 8 und der Schicht aus Gummi oder gummiähnlichem Material 4 können weitere Schichten vorhanden sein, die vorzugsweise zur Verbesserung der Lagereigenschaften und/oder Dämpfungseigenschaften des Gummilagers vorgesehen sind. So können zwischen dem Lagerkern 8 und der Schicht aus Gummi oder gummiähnlichem Material 4 optional Einleger 11 oder alternativ oder additiv dazu Kammern, Hohlräume oder weitere Schichten aus Gummi oder gummiähnlichem Material vorgesehen sein, die zu einer besseren Dämpfungswirkung und Minderung von Vibrationen beitragen. Hohlräume oder Kammern können dabei mit Luft oder einer Flüssigkeit gefüllt sein. Ferner weist der Lagerkern 8 eine Bohrung 9 auf, die der Aufnahme oder Anbindung weiterer zu lagernder Bauteile, wie beispielsweise einen Kraftfahrzeuglenker, dient.

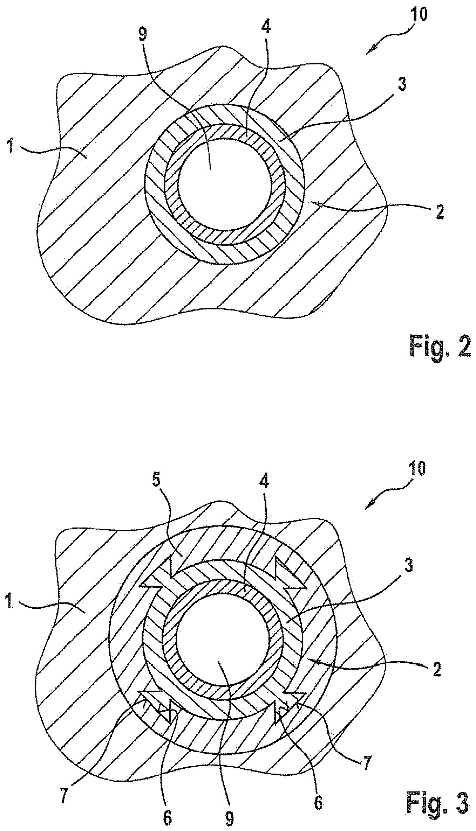

Figur 2 zeigt ein funktionelles Bauteil 10, insbesondere für ein Kraftfahrzeug, das eine gehärtete Faserverbundpressmasse 1 umfasst. In die gehärtete Faserverbundpressmasse 1 ist ein Gummilager 2 integriert. Das Gummilager umfasst in dieser Ausführungsform einen Außenring 3 und eine innenliegende Schicht aus Gummi oder einem gummiähnlichen Material 4, die wiederum eine Bohrung 9 aufweist. Weiter kann das Gummilager 2 auch noch einen Lagerkern umfassen, der mindestens abschnittsweise an der Innenseite der Schicht aus Gummi oder gummiähnlichem Material 4 angeordnet ist. Das Gummilager 2 stellt wiederum eine Anbindungsfunktion bzw. Aufnahmevorkehrung für ein zu lagerndes Bauteil bereit und ist dazu vorgesehen, beispielsweise einen Kraftfahrzeuglenker aufzunehmen und geräuscharm und vibrationsarm zu lagern.

Das Gummilager 2 ist in die gehärtete Faserverbundpressmasse 1 integriert und beispielsweise in die Faserverbundmasse eingepresst. Dadurch wird ein guter Verbund zwischen dem Gummilager 2 und der gehärteten Faserverbundpressmasse 1 erhalten und das Gummilager 2 wird in seiner Position fixiert und gegenüber einwirkenden mechanischen Kräften, beispielsweise Zugkräften, Torsionskräften oder Vibrationen, stabilisiert. Der Außenring 3 des Gummilagers kann dabei aus einem metallischen Werkstoff oder einem kunststoffhaltigen Werkstoff gebildet sein. Die Verwendung eines kunststoffhaltigen Werkstoffes bietet dabei den Vorteil, zusätzlich eine stoffschlüssige Verbindung zwischen dem Gummilager 2 und der gehärteten Faserverbundpressmasse 1 bereitzustellen.

Das Gummilager 2 kann vorteilhafterweise in einer Aussparung in der gehärteten Faserverbundpressmasse 1 angeordnet sein.

Das in Figur 3 gezeigte funktionelle Bauteil 20 weist ebenfalls ein in eine gehärtete Faserverbundpressmasse 1 integriertes Gummilager 2 auf. Im Vergleich zu dem funktionellen Bauteil 10 aus Figur 2, ist in die gehärtete Faserverbundpressmasse 1 eine Buchse 5 eingearbeitet, die beispielsweise aus Metall oder einem kunststoffhaltigen Material gebildet sein kann. Die Buchse 5 dient der Aufnahme, Positionierung und Fixierung des Gummilagers 2 in der gehärteten Faserverbundpressmasse 1.

Hierzu weist das Gummilager 1 zusätzlich eine erste Haftstruktur 6 auf. Die erste Haftstruktur 6 ist in dieser Ausführungsform beispielhaft in Form von Schwalbenschwanzstrukturen ausgebildet, kann aber jegliche, die Reibung zwischen dem Gummilager 2 und der gehärteten Faserverbundpressmasse 1 unterstützende Form, aufweisen. Die hier gezeigte Schwalbenschwanzform hat zusätzlich den Vorteil, dass zwischen der ersten Haftstruktur 6 des Gummilagers 2, die auf dem Außenring 3 des Gummilagers 2 angeordnet ist, und einer zweiten Haftstruktur 7, die an der Innenseite der Buchse 5 vorgesehen ist, eine besonders stabile formschlüssige Verbindung gebildet wird. Die erste Haftstruktur 6 des Gummilagers 2 und die zweite Haftstruktur 7 der Buchse 5 bilden jeweilige Gegenstücke, die passgenau aufeinander abgestimmt sind, so dass eine gute Integration und Verankerung des Gummilagers 2 in der Faserverbundpressmasse 1 gewährleistet werden kann.

Die Buchse kann ferner mindestens einen flächigen Bereich zur Anordnung eines Werkzeugs zur Befestigung des Gummilagers 2 in der Buchse 5 oder zum Herauslösen des Gummilagers 2 aus der Buchse 5, aufweisen.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste:

- 1: gehärtete Faserverbundpressmasse
- 2: Gummilager
- 3: Außenring des Gummilagers
- 4: Schicht aus Gummi oder einem gummiähnlichen Material
- 5: Buchse
- 6: erste Haftstruktur
- 7: zweite Haftstruktur
- 8: Lagerkern
- 9: Bohrung
- 10, 20: funktionelles Bauteil
- 11: Einleger

## Patentansprüche

1. Funktionelles Bauteil, insbesondere für ein Kraftfahrzeug, wobei das Bauteil (10, 20) eine gehärtete Faserverbundpressmasse (1) umfasst und wobei in die Faserverbundpressmasse (1) mindestens ein Gummilager (2) integriert ist, wobei das Gummilager (2) in eine Aussparung in der gehärteten Faserverbundpressmasse (1) eingepresst ist, **dadurch gekennzeichnet, dass** das Gummilager (2) einen metallischen oder kunststoffhaltigen Außenring (3) umfasst und der Außenring (3) eine erste Haftstruktur (7) aufweist, die ein selbständiges Herauslösen des Gummilagers (2) aus der gehärteten Faserverbundpressmasse (1) verhindert, wobei die gehärtete Faserverbundpressmasse (1) eine Buchse (5) zur Aufnahme des Gummilagers (2) aufweist und die Buchse (2) eine zweite Haftstruktur (7) aufweist, die mit der ersten Haftstruktur (6) des Außenrings (3) des Gummilagers (2) formschlüssig in Eingriff gelangt.

2. Funktionelles Bauteil nach Anspruch 1, **dadurch gekennzeichnet, dass** die Buchse (5) mindestens einen flächigen Bereich zur Anordnung eines Werkzeugs zur Befestigung des Gummilagers (2) in der Buchse (5) oder zum Herauslösen des Gummilagers (2) aus der Buchse (5), umfasst.

3. Funktionelles Bauteil nach Anspruch 1 oder 2, **dadurch gekennzeichnet, dass** die Buchse (5) galvanisch isolierend ausgebildet ist.

4. Verfahren zur Herstellung eines funktionellen Bauteils (10, 20) nach einem der vorhergehenden Ansprüche, **gekennzeichnet durch** die Schritte:
- Bereitstellen einer Faserverbundpressmasse,
- Härten der Faserverbundpressmasse, wobei die gehärtete Faserverbundpressmasse eine Buchse (5) mit einer zweiten Haftstruktur (7) zur der Aufnahme, Positionierung und Fixierung eines Gummilagers (2) in der gehärteten Faserverbundpressmasse (1) umfasst,
- Bereitstellen eines Gummilagers (2) mit einem metallischen oder kunststoffhaltigen Außenring (3), wobei das Gummilager (1) eine erste Haftstruktur (6) umfasst und
- Aufnehmen des Gummilagers (1) in die Buchse (5), so dass die erste Haftstruktur (6) und die zweite Haftstruktur (7) der Buchse (5) formschlüssig verbunden werden, so dass der Außenring (3) des Gummilagers (2) in die gehärtete Faserverbundpressmasse (1) integriert wird.

5. Kraftfahrzeug umfassend mindestens ein funktionelles Bauteil (10, 20) nach einem der Ansprüche 1 bis 3.

## Claims

1. Functional component, in particular for a motor vehicle, wherein the component (10, 20) comprises a cured fibre-composite moulding compound (1), and wherein at least one rubber bearing (2) is integrated into the fibre-composite moulding compound (1), wherein the rubber bearing (2) is pressed into a cutout in the cured fibre-composite moulding compound (1), **characterized in that** the rubber bearing (2) comprises a metallic or plastics-containing outer ring (3) and the outer ring (3) has a first adhesive structure (7) which prevents autonomous detachment of the rubber bearing (2) from the cured fibre-composite moulding compound (1), wherein the cured fibre-composite moulding compound (1) has a bushing (5) for receiving the rubber bearing (2) and the bushing (2) has a second adhesive structure (7) which comes into form-fitting engagement with the first adhesive structure (6) of the outer ring (3) of the rubber bearing (2).

2. Functional component according to Claim 1, **characterized in that** the bushing (5) comprises at least one planar region for the arrangement of a tool for fastening the rubber bearing (2) in the bushing (5) or for detaching the rubber bearing (2) from the bushing (5) .

3. Functional component according to Claim 1 or 2, **characterized in that** the bushing (5) is configured so as to be galvanically isolating.

4. Method for producing a functional component (10, 20) according to one of the preceding claims, **characterized by** the steps:
- providing a fibre-composite moulding compound,
- curing the fibre-composite moulding compound, wherein the cured fibre-composite moulding compound comprises a bushing (5) having a second adhesive structure (7) for receiving, positioning, and fixing a rubber bearing (2) in the cured fibre-composite moulding compound (1),
- providing a rubber bearing (2) having a metallic or plastics-containing outer ring (3), wherein the rubber bearing (1) comprises a first adhesive structure (6), and
- receiving the rubber bearing (1) in the bushing (5), such that the first adhesive structure (6) and the second adhesive structure (7) of the bushing (5) are form-fittingly connected, such that the outer ring (3) of the rubber bearing (2) is integrated in the cured fibre-composite moulding compound (1).

5. Motor vehicle comprising at least one functional component (10, 20) according to one of Claims 1 to 3.

## Revendications

1. Composant fonctionnel, notamment pour un véhicule automobile, le composant (10, 20) comprenant une masse comprimée de composite de fibres durcie (1) et au moins un palier en caoutchouc (2) étant intégré dans la masse comprimée de composite de fibres (1), le palier en caoutchouc (2) étant enfoncé dans un évidement dans la masse comprimée de composite de fibres durcie (1), **caractérisé en ce que** le palier en caoutchouc (2) comprend une bague extérieure (3) métallique ou contenant de la matière plastique et la bague extérieure (3) présente une première structure adhésive (7), qui empêche le palier en caoutchouc (2) de se détacher de lui-même de la masse comprimée de composite de fibres durcie (1), la masse comprimée de composite de fibres durcie (1) présentant une douille (5) destinée à recevoir le palier en caoutchouc (2) et la douille (2) présentant une deuxième structure adhésive (7) qui vient en prise par complémentarité de forme avec la première structure adhésive (6) de la bague extérieure (3) du palier en caoutchouc (2).

2. Composant fonctionnel selon la revendication 1, **caractérisé en ce que** la douille (5) comprend au moins une zone plane pour l'agencement d'un outil pour la fixation du palier en caoutchouc (2) dans la douille (5) ou pour le détachement du palier en caoutchouc (2) de la douille (5).

3. Composant fonctionnel selon la revendication 1 ou 2, **caractérisé en ce que** la douille (5) est réalisée sous forme galvaniquement isolante.

4. Procédé de fabrication d'un composant fonctionnel (10, 20) selon l'une quelconque des revendications précédentes, **caractérisé par** les étapes suivantes :
- la fourniture d'une masse comprimée de composite de fibres,
- le durcissement de la masse comprimée de composite de fibres, la masse comprimée de composite de fibres durcie comprenant une douille (5) ayant une deuxième structure adhésive (7) pour recevoir, positionner et fixer un palier en caoutchouc (2) dans la masse comprimée de composite de fibres durcie (1),
- la fourniture d'un palier en caoutchouc (2) ayant une bague extérieure (3) métallique ou contenant de la matière plastique, le palier en caoutchouc (1) comprenant une première structure adhésive (6) et
- la réception du palier en caoutchouc (1) dans la douille (5), de telle sorte que la première structure adhésive (6) et la deuxième structure adhésive (7) de la douille (5) sont reliées par complémentarité de forme, de telle sorte que la bague extérieure (3) du palier en caoutchouc (2) est intégrée dans la masse comprimée de composite de fibres durcie (1).

5. Véhicule automobile comprenant au moins un composant fonctionnel (10, 20) selon l'une quelconque des revendications 1 à 3.
